# FASCICULE DE BREVET EUROPEEN

(11) **EP 1 304 267 B1**
(45) Date de publication et mention de la délivrance du brevet: **03.11.2010**
(21) Numéro de dépôt: 02292583.8
(22) Date de dépôt: 18.10.2002
(51) Int. Cl.: B60R 21/26

(54) **Générateur de gaz hybride pour un airbag**
Hybrid-Gasgenerator für einen Airbag
Hybrid gas generator for airbag

(30) Priorité: 19.10.2001 FR 0113489
(43) Date de publication de la demande: 23.04.2003
(73) Titulaire: LIVBAG, 75017 Paris (FR)
(72) Inventeur: Lebaudy, Franck, 29470 Loperhet (FR); Peremarty, François, 29000 Quimper (FR); Perotto, Christian, 29500 Ergue Gaberic (FR)
(74) Mandataire: Branger, Jean-Yves

(56) Documents cités:
- WO-A-01/34516
- US-A- 5 967 550
- US-A- 6 145 876

## Description

La présente invention se rapporte au domaine de la sécurité automobile et concerne, d'une part, un dispositif générateur de gaz hybride, et d'autre part, un générateur pyrotechnique de gaz, pour gonfler un coussin de protection latéral.

Ces dernières années, de nouveaux générateurs, dits adaptatifs, sont apparus afin de limiter les risques d'accidents corporels occasionnés par le déploiement du coussin de protection. Pour cela, ces différents générateurs, couplés à des systèmes de détection appropriés, permettent de moduler le débit et/ou le volume de gaz en fonction de certains paramètres comme par exemple la morphologie et le positionnement du passager, la température ambiante, la nature et l'intensité du choc. Ces générateurs sont dans tous les cas prévus pour fonctionner dans une période de temps de l'ordre de cinquante millisecondes.

Très récemment, les constructeurs automobiles ont souhaité incorporer des dispositifs utilisant des coussins de protection gonflables pour protéger les occupants, non seulement lorsque le véhicule subit un choc latéral, mais aussi lorsque le véhicule subit des tonneaux à la suite du choc latéral. Pour cela, les coussins doivent rester gonflés durant une période de temps de l'ordre d'une dizaine de secondes. Le brevet US 5,967,550 décrit un générateur doté de deux chargements pyrotechniques, le premier servant à gonfler le coussin de protection dans les millisecondes qui suivent l'accident, et le second permettant de maintenir le coussin gonflé durant une dizaine de secondes. Néanmoins, compte tenu de la géométrie particulière de ce générateur, ce dernier ne peut pas être facilement intégré dans tous les véhicules automobiles.

Il a alors été proposé, comme dans la demande de brevet WO 01/34516, un dispositif comprenant, d'une part, un corps principal contenant un allumeur électro-pyrotechnique et un premier chargement pyrotechnique, et d'autre part, un tube rattaché au corps principal et contenant un second chargement pyrotechnique constitué par des grains de poudre. Ce dispositif présente l'avantage, par rapport au générateur précédemment cité, de posséder un corps principal de faible encombrement associé à un tube pouvant facilement se loger le long du toit du véhicule. Néanmoins, compte tenu de l'utilisation de deux chargements pyrotechniques distincts, le coût de fabrication d'un tel dispositif est relativement élevé, ce qui est préjudiciable dans un marché concurrentiel comme celui de l'industrie automobile. De plus, l'utilisation d'un chargement pyrotechnique sous la forme de grains de poudre dans le tube est pénalisante car, en fonctionnement, on retrouve des particules très chaudes dans le coussin de protection pouvant entraîner une dégradation prématurée de celui-ci. Par ailleurs, l'utilisation d'un chargement pyrotechnique pour générer du gaz durant une période d'une dizaine de secondes a pour effet que la surface du dispositif est maintenue à une température de l'ordre de plusieurs centaines de degrés Celsius durant ce laps de temps. Ceci peut être néfaste pour le coussin de protection ou encore pour l'habillage du véhicule qui se trouve à proximité du dispositif.

L'homme du métier est donc toujours à la recherche d'un dispositif permettant de pallier les problèmes précédemment évoqués.

L'objet de la présente invention concerne un dispositif générateur de gaz hybride utilisé en sécurité automobile pour gonfler au moins un coussin de protection latéral, caractérisé en ce qu'il comprend :
- un générateur pyrotechnique de gaz réalisé à l'aide, d'une part, d'un corps qui contient un allumeur électro-pyrotechnique et qui est muni d'une première et d'une seconde extrémités, et d'autre part, d'un élément flexible qui contient un chargement pyrotechnique et qui est rattaché à la seconde extrémité du corps,
- un réservoir de gaz sous pression rattaché au générateur pyrotechnique de gaz au niveau de la première extrémité du corps,
- ledit allumeur étant apte en fonctionnement à provoquer, d'une part, l'initiation en combustion du chargement pyrotechnique contenu dans l'élément flexible, et d'autre part, la libération du gaz sous pression contenu dans le réservoir.

Ce dispositif, outre le fait de posséder une géométrie lui permettant d'être intégré dans toutes sortes de véhicules automobiles, présente donc un coût de fabrication fortement réduit compte tenu de l'utilisation d'un réservoir de gaz sous pression en lieu et place d'un chargement pyrotechnique.

Préférentiellement, le chargement pyrotechnique contenu dans l'élément flexible est apte à générer un volume de gaz suffisant pour totalement gonfler le coussin de protection dans une période de temps inférieure à quarante millisecondes. Par ailleurs, en fonctionnement, le gaz sous pression contenu dans le réservoir est libéré de façon à maintenir le coussin de protection gonflé durant une période de temps de l'ordre de plusieurs secondes. Ce gaz sous pression n'est régulièrement libéré qu'à compter du moment où le coussin de protection est déjà totalement gonflé par suite de la combustion du chargement pyrotechnique.

Avantageusement, le chargement pyrotechnique contenu dans l'élément flexible est réalisé sous la forme d'un bloc cylindrique qui, d'une part, possède une longueur très supérieure à son diamètre, et d'autre part, est muni d'un canal central. Avantageusement encore, ce chargement pyrotechnique est constitué par un propergol composite comprenant une charge à base de perchlorate d'ammonium et de nitrate de sodium et un liant inerte.

Préférentiellement, une gaine souple thermorétractée enserre et confine le chargement pyrotechnique contenu dans l'élément flexible. De façon avantageuse, l'allumeur électro-pyrotechnique provoque, d'une part, l'initiation en combustion du chargement pyrotechnique contenu dans l'élément flexible, et d'autre part, la libération du gaz sous pression contenu dans le réservoir, au moyen de charges relais.

Avantageusement encore, l'élément flexible est réalisé à l'aide d'un tube souple en matériau thermoplastique muni d'orifices de sortie régulièrement répartis sur sa circonférence et sur sa longueur. Le chargement pyrotechnique étant logé dans le tube, il suffit donc d'adapter la longueur de ce tube à la taille du coussin de protection retenu. De plus, le choix d'un tel matériau pour former le tube permet de conférer une sécurité supplémentaire au dispositif car, en cas de surpression anormale, toute projection de partie métallique susceptible de blesser un occupant est évitée.

La présente invention concerne également un générateur pyrotechnique de gaz utilisé en sécurité automobile pour gonfler un coussin de protection latéral, caractérisé en ce qu'il comprend :
- un élément flexible contenant un chargement pyrotechnique réalisé sous la forme d'un bloc cylindrique muni d'un canal central, ledit bloc possédant préférentiellement une longueur très supérieure à son diamètre,
- un allumeur électro-pyrotechnique situé à proximité du chargement pyrotechnique.

Préférentiellement, une gaine souple thermorétractée enserre et confine le chargement pyrotechnique. De plus, l'élément flexible peut être réalisé à l'aide d'un tube souple en matériau thermoplastique muni d'orifices de sortie régulièrement répartis sur sa circonférence et sur longueur.
La figure 1 est une vue en coupe longitudinale d'un dispositif générateur de gaz hybride selon l'invention.
La figure 2 est une vue partielle agrandie du tube flexible contenant le chargement pyrotechnique enserré dans la gaine souple.
La figure 3 est une vue en coupe transversale d'un premier chargement pyrotechnique pouvant être logé dans l'élément flexible.
La figure 4 est une vue en coupe transversale d'un deuxième chargement pyrotechnique pouvant être logé dans l'élément flexible.
La figure 5 est une vue en coupe transversale d'un troisième chargement pyrotechnique pouvant être logé dans l'élément flexible.
La figure 6 est une vue en coupe transversale d'un autre chargement pyrotechnique pouvant être logé dans l'élément flexible.

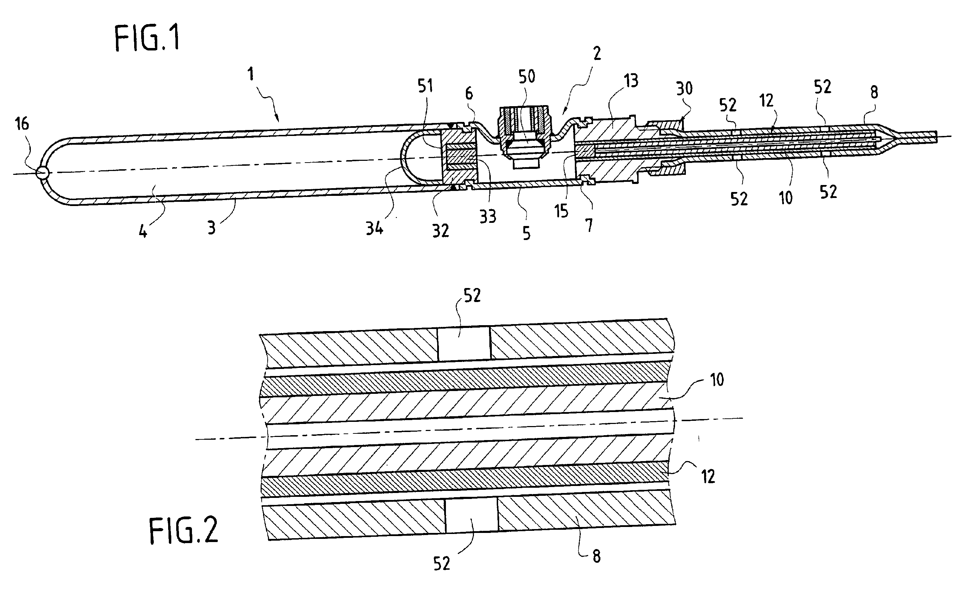

En se référant aux figures 1 et 2, on observe qu'un dispositif 1 générateur de gaz hybride selon l'invention est réalisé à l'aide d'un générateur pyrotechnique 2 de gaz auquel est directement rattaché un réservoir 3 de gaz 4 sous pression.

Le générateur pyrotechnique 2 est constitué à partir d'un corps 5 possédant une première extrémité 6 et une seconde extrémité 7, d'un allumeur électro-pyrotechnique 50 et d'un tube 8 souple en matériau thermoplastique dans lequel est logé un chargement pyrotechnique. Plus précisément, ce corps est muni d'un orifice central dans lequel est inséré puis soudé l'allumeur 50 électro-pyrotechnique. Le chargement pyrotechnique est réalisé sous la forme d'un bloc 10 cylindrique auquel est associée une charge relais 15, une gaine 12 souple thermorétractée enserrant le tout. Une bague 13 présentant un nez conique est fixée par sertissage dans le corps 5 au niveau de sa seconde extrémité 7. Une première extrémité du chargement pyrotechnique ainsi confiné est insérée dans la bague 13. Le tube 8 possède, d'une part, une première extrémité qui est emmanchée sur le nez conique de la bague 13 et sur laquelle est rapporté un collier 30 fixé par vissage dans ladite bague 13, et d'autre part, une seconde extrémité qui est emboutie et qui permet, après soudure, de constituer un bouchon étanche. De plus, le tube 8 comporte des orifices de sortie 52 de gaz qui sont régulièrement répartis sur sa circonférence et sur sa longueur.

Une pièce métallique 32 cylindrique présentant un évidement central est fixée par sertissage dans le corps 5 au niveau de sa première extrémité 6 et une charge relais 33 est logée dans l'évidement central. Cet évidement central est creusé sur pratiquement toute la longueur de la pièce métallique 32 de façon à ne laisser qu'une extrémité pleine 51 de faible épaisseur pouvant jouer le rôle en fonctionnement d'un opercule frangible. Le réservoir 3 est réalisé à l'aide d'un corps métallique cylindrique comprenant, d'une part, une première extrémité présentant un orifice de remplissage de gaz 4 obturé par un bouchon 16 fixé par soudure, et d'autre part, une seconde extrémité ouverte. Un corps métallique 34 cylindrique doté d'un passage central formant une tuyère interne est introduit dans le réservoir 3 et est emmanché en force à proximité de la seconde extrémité dudit réservoir 3. Le réservoir 3 muni du corps métallique 34 est finalement fixé par soudure au générateur pyrotechnique 2 au niveau de la pièce métallique 32.

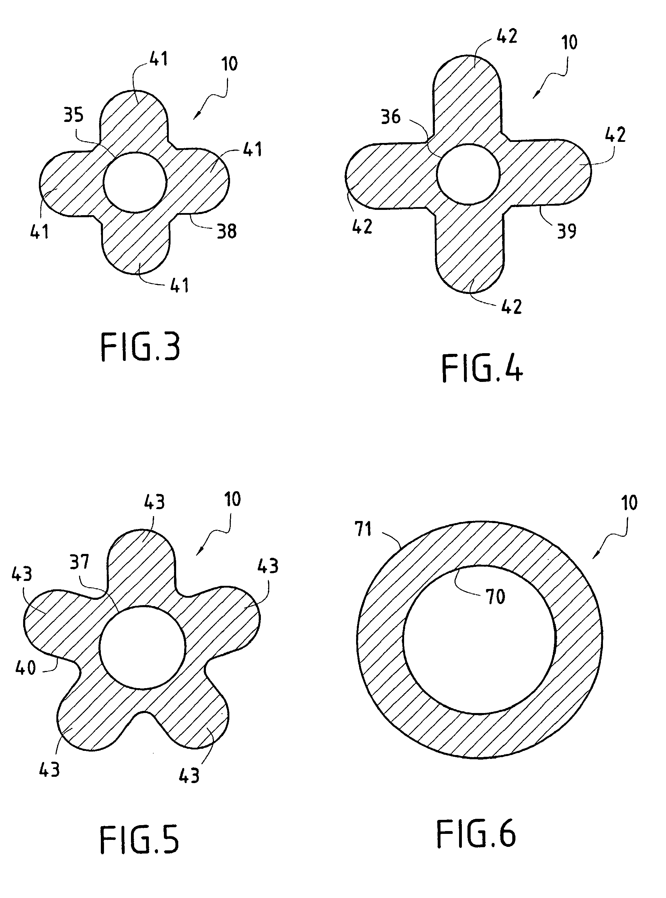

Aux figures 3 à 5 sont représentés trois exemples de chargement pyrotechnique pouvant former le bloc 10. Dans ces trois cas, le bloc 10 possède, d'une part, un canal central 35, 36, 37 ayant un diamètre compris entre 0.9 et 1,5 millimètres, et d'autre part, une paroi latérale 38, 39, 40 munie sur toute sa longueur de protubérances 41, 42, 43. A la figure 6, on observe que le bloc 10 peut également être réalisé sous la forme d'un tube possédant une paroi latérale 71 et un canal central 70. Le bloc 10 est, dans tous les cas, avantageusement constitué par un propergol composite comprenant une charge à base de perchlorate d'ammonium et de nitrate de sodium et un liant inerte.

En cas de choc nécessitant le gonflage du coussin de protection pour assurer la protection de l'occupant, le dispositif 1 fonctionne de la manière suivante. L'allumeur 50 électro-pyrotechnique assure l'allumage des deux charges relais 15 et 33. La charge relais 15 provoque très rapidement l'initiation en combustion du bloc 10 qui génère en quelques millisecondes une importante quantité de gaz pouvant s'échapper par les orifices de sortie 52. Finalement, le coussin de protection est totalement gonflé dans une période de temps n'excédant pas quarante millisecondes.

Après que le bloc 10 a fini de brûler, la charge relais 33 force l'extrémité pleine 51 de la pièce métallique 32 à se fracturer et le gaz 4 sous pression contenu dans le réservoir 3 peut s'échapper lentement en traversant tout d'abord le passage central du corps métallique 34, puis la pièce métallique 32, le corps 5 et finalement pénétrer dans le tube 8 désormais vide. Ce gaz 4 est alors évacué par les orifices de sortie 52 et permet de maintenir le coussin de protection totalement gonflé durant une période de temps de l'ordre d'une dizaine de secondes. Il est possible d'augmenter ou de réduire cette période de temps en faisant varier le niveau de pression et le volume du gaz 4 dans le réservoir 3 ou encore en modifiant le diamètre du passage central du corps métallique 34.

## Revendications

1. Dispositif (1) générateur de gaz hybride utilisé en sécurité automobile pour gonfler au moins un coussin de protection latéral, **caractérisé en ce qu'**il comprend :
- un générateur pyrotechnique (2) de gaz réalisé à l'aide, d'une part, d'un corps (5) qui contient un allumeur (50) électro-pyrotechnique et qui est muni d'une première et d'une seconde extrémités (6, 7), et d'autre part, d'un élément flexible (8) qui contient un chargement pyrotechnique (10) et qui est rattaché à la seconde extrémité du corps,
- un réservoir (3) de gaz (4) sous pression rattaché au générateur pyrotechnique de gaz au niveau de la première extrémité du corps,
- ledit allumeur étant apte en fonctionnement à provoquer, d'une part, l'initiation en combustion du chargement pyrotechnique contenu dans l'élément flexible, et d'autre part, la libération du gaz sous pression contenu dans le réservoir.

2. Dispositif (1) selon la revendication 1, **caractérisé en ce que** le chargement pyrotechnique (10) contenu dans l'élément flexible (8) est apte à générer un volume de gaz suffisant pour gonfler le coussin de protection dans une période de temps inférieure à quarante millisecondes.

3. Dispositif (1) selon l'une quelconque des revendications 1 ou 2, **caractérisé en ce qu'**en fonctionnement, le gaz (4) sous pression contenu dans le réservoir est libéré de façon à maintenir le coussin de protection gonflé durant une période de temps de l'ordre de plusieurs secondes.

4. Dispositif (1) selon l'une quelconque des revendications précédentes, **caractérisé en ce que** le chargement pyrotechnique contenu dans l'élément flexible est réalisé sous la forme d'un bloc (10) cylindrique muni d'un canal central (35).

5. Dispositif (1) selon l'une quelconque des revendications précédentes, **caractérisé en ce que** le chargement pyrotechnique (10) contenu dans l'élément flexible (8) est constitué par un propergol composite comprenant une charge à base de perchlorate d'ammonium et de nitrate de sodium et un liant inerte.

6. Dispositif (1) selon l'une quelconque des revendications précédentes, **caractérisé en ce qu'**une gaine (12) souple thermorétractée enserre et confine le chargement pyrotechnique (10) contenu dans l'élément flexible (8).

7. Dispositif (1) selon la revendication 1, **caractérisé en ce que** l'allumeur (50) provoque l'initiation en combustion du chargement pyrotechnique (10) contenu dans l'élément flexible (8) et la libération du gaz (4) sous pression contenu dans le réservoir au moyen de charges relais (15, 33).

8. Dispositif (1) selon l'une quelconque des revendications précédentes, **caractérisé en ce que** l'élément flexible est réalisé à l'aide d'un tube (8) souple en matériau thermoplastique muni d'orifices de sortie (52) régulièrement répartis sur sa circonférence et sur sa longueur.

## Claims

1. Hybrid gas generator device (1) used for motor vehicle safety to inflate at least one side airbag, **characterized in that** it comprises:
- a pyrotechnic gas generator (2) produced using a body (5) which contains an electropyrotechnic igniter (50) and which is provided with first and second ends (6, 7) and a flexible element (8) which contains a pyrotechnic charge (10) and which is attached to the second end of the body;
- a pressurized gas (4) reservoir (3) attached to the pyrotechnic gas generator at the first end of the body;
- said igniter being capable during operation of initiating the combustion of the pyrotechnic charge contained in the flexible element and of causing the pressurized gas contained in the reservoir to be released.

2. Device (1) according to claim 1, **characterized in that** the pyrotechnic charge (10) contained in the flexible element (8) is capable of generating a volume of gas sufficient to inflate the airbag in a time period of less than forty milliseconds.

3. Device (1) according to one of claims 1 or 2, **characterized in that,** in operation, the pressurized gas (4) contained in the reservoir is released so as to keep the airbag inflated for a time period of about several seconds.

4. Device (1) according to anyone of the preceding claims, **characterized in that** the pyrotechnic charge contained in the flexible element is produced in the form of a cylindrical block (10) provided with a central channel (35).

5. Device (1) according to anyone of the preceding claims, **characterized in that** the pyrotechnic charge (10) contained in the flexible element (8) comprises a composite propellant comprising a charge based on ammonium perchlorate, sodium nitrate and an inert binder.

6. Device (1) according to anyone of the preceding claims, **characterized in that** a heat-shrunk pliant sleeve (12) grips and confines the pyrotechnic charge (10) contained in the flexible element (8).

7. Device (1) according to claim 1, **characterized in that** the igniter (50) initiates the combustion of the pyrotechnic charge (10) contained in the flexible element (8) and causes the pressurized gas (4) contained in the reservoir to be released by means of booster charges (15, 33).

8. Device according to anyone of the preceding claims, **characterized in that** the flexible element is produced using a pliant tube (8) made of a thermoplastic, provided with outlet orifices (52) uniformly distributed over its circumference and along its length.

## Patentansprüche

1. Hybrid-Gasgeneratorvorrichtung (1), die zur Automobilsicherheit verwendet wird, um wenigstens ein seitliches Schutzkissen aufzublasen, **dadurch gekennzeichnet, dass** sie umfasst:
- einen pyrotechnischen Gasgenerator (2), der mit Hilfe einerseits eines Körpers (5) hergestellt ist, der einen elektro-pyrotechnischen Zünder (50) enthält und der mit einem ersten und einen zweiten Ende (6, 7) ausgestattet ist, und andererseits eines flexiblen Elements (8), das eine pyrotechnische Ladung (10) enthält und das am zweiten Ende des Körpers angeschlossen ist,
- einen Behälter (3) mit unter Druck stehendem Gas (4), der am pyrotechnischen Gasgenerator auf Höhe des ersten Endes des Körpers angeschlossen ist,
- wobei der Zünder ausgelegt ist, im Betrieb einerseits die Zündung zur Verbrennung der im flexiblen Element enthaltenen pyrotechnischen Ladung und andererseits die Freisetzung des im Behälter enthaltenen unter Druck stehenden Gases zu veranlassen.

2. Vorrichtung (1) gemäß Anspruch 1, **dadurch gekennzeichnet, dass** die im flexiblen Element (8) enthaltene pyrotechnische Ladung (10) ausgelegt ist, ein Gasvolumen zu erzeugen, das ausreichend ist, um das Schutzkissen in einer Zeitdauer kleiner als vierzig Millisekunden aufzublasen.

3. Vorrichtung (1) gemäß einem der Ansprüche 1 oder 2, **dadurch gekennzeichnet, dass** im Betrieb das im Behälter enthaltene unter Druck stehende Gas (4) freigesetzt wird, um das Schutzkissen während einer Zeitdauer in der Größenordnung mehrerer Sekunden aufgeblasen zu halten.

4. Vorrichtung (1) gemäß einem der vorhergehenden Ansprüche, **dadurch gekennzeichnet, dass** die im flexiblen Element enthaltene pyrotechnische Ladung in Form eines zylindrischen Blocks (10) hergestellt ist, der mit einem zentralen Kanal (35) ausgestattet ist.

5. Vorrichtung (1) gemäß einem der vorhergehenden Ansprüche, **dadurch gekennzeichnet, dass** die im flexiblen Element (8) enthaltene pyrotechnische Ladung (10) aus einer Raketentreibstoffzusammensetzung gebildet ist, die eine Ladung auf Basis von Ammoniumperchlorat und Natriumnitrat und ein inertes Bindemittel umfasst.

6. Vorrichtung (1) gemäß einem der vorhergehenden Ansprüche, **dadurch gekennzeichnet, dass** eine nachgiebige wärmegeschrumpfte Ummantelung (12) die im flexiblen Element (8) enthaltene pyrotechnische Ladung (10) umschließt und begrenzt.

7. Vorrichtung (1) gemäß Anspruch 1, **dadurch gekennzeichnet, dass** der Zünder (50) die Zündung zur Verbrennung der im flexiblen Element (8) enthaltenen pyrotechnischen Ladung (10) und die Freisetzung des im Behälter enthaltenen unter Druck stehenden Gases (4) mittels Relaisladungen (15, 33) veranlasst.

8. Vorrichtung (1) gemäß einem der vorhergehenden Ansprüche, **dadurch gekennzeichnet, dass** das flexible Element mit Hilfe eines nachgiebigen Rohrs (8) aus thermoplastischem Material hergestellt ist, das mit Austrittsöffnungen (52) versehen ist, die regelmäßig über seinen Umfang und seine Länge verteilt sind.
